# EUROPEAN PATENT APPLICATION

(11) **EP 4 410 429 A2**
(43) Date of publication of application: **07.08.2024**
(21) Application number: 24172902.9
(22) Date of filing: 16.06.2011
(51) Int. Cl.: B01L 7/00

(54) **SPECIMEN FREEZING RATE REGULATOR DEVICE**

(30) Priority: 18.06.2010 US 81902410; 03.02.2011 US 201161439327 P
(62) Divisional of application: 11796458.5
(71) Applicant: Biocision, LLC, Mill Valley, California 94941 (US)
(72) Inventor: SCHRYVER, Brian, Redwood City, California, 94061 (US)
(74) Representative: dompatent von Kreisler Selting Werner - Partnerschaft von Patent- und Rechtsanwälten mbB

(57) **Abstract**

A system and method for concurrently and uniformly removing thermal energy from a specimen sample. A thermal insulating device is provided comprising an insulating material, the device having a plurality of chambers for receiving specimen samples, the device further includes a thermal ballast whereby the rate of thermal energy removal is controlled and influenced by the thermal ballast.

## Description

### FIELD OF THE INVENTION

This invention relates to devices that will regulate the rate of heat loss from sample or specimen vials contained within, following placement of the assembly into a lower temperature environment, thereby producing the desired temperature reduction profile. In particular, the device is intended to be used with live cell suspensions to provide the appropriate freezing rate for enhanced cell survival following cryogenic storage.

### BACKGROUND OF THE INVENTION

Common and accepted methods for long-term storage of tissues and live cells typically involve long-term storage of the sample at a temperature at which molecular activity is significantly reduced. At sufficiently reduced temperatures, the specimens can be stored most likely indefinitely without degradation. The recovery of live cells preserved by this method is dependent upon minimizing injurious ice crystal growth in the intracellular region both during the freezing process and the thawing process. A combination of two methods for reducing intracellular ice crystal growth is typically applied during the freezing process. The first method involves the addition of a cryoprotectant compound to the tissues or cell suspension solution. The cryoprotectant will permeate the cell membrane and serves to inhibit ice crystal nucleation and growth in both the extracellular and intracellular region. The second method involves the time management of the reduction in sample temperature. By regulating the rate of heat loss from the sample, the exclusion of solute salt and buffer components from forming ice crystals in the extracellular region will concentrate the solutes in the remaining liquid phase. The concentrated solutes will impose an osmotic gradient upon the cell membrane that will draw water from the intracellular region. If the freezing of the intracellular solution is coincident with the appropriate level of water content, the size of the crystals resulting from the crystallization of the remaining intracellular water will not be sufficient to cause damage to the cell. If, however, the degree of water removal from the cell is excessive, or if the exposure of the cells to concentrated extracellular solutes is too long in duration, damage to cellular structures will incur, resulting in reduced cell survival upon thawing. Therefore, there is a range of intracellular water content that is appropriate for cell survival during freezing. Ensuring that the intracellular solidification coincides with the correct level of intracellular water content can be accomplished by controlling the temperature reduction rate profile of the sample. While the optimal temperature reduction profile is dependent upon multiple factors such as cell membrane permeability, cell size and concentration of solutes and cryoprotectant components, once the appropriate reduction profile is established for a specific cell type, the survival rate upon thawing can be consistently achieved by applying the same optimal temperature reduction profile to all samples of the given cell type.

Regulation of the temperature reduction profile can be easily achieved through active thermal management by electronic processor regulation of a freezing chamber. Although the regulated freezing chambers are effective in reproducing the desired temperature reduction rate, the cost of the units can be prohibitive. In addition, the requirement for freezing device availability is not uniform in typical laboratory environments, resulting in freezing backlogs until the chambers become available. Effective and appropriate temperature reduction profiles can also be achieved by passive cooling methodologies. A common practice involves wrapping the specimen vials in towels, cardboard, styrene foam or other insulating materials prior to placement in a mechanical freezer, thereby approximating the temperature reduction profile that will result in recovery of live cells. This method, however, provides inconsistent and sometimes inferior survival rates and most importantly post-thaw cell function or such methods can result in an unintentional and undesirable selection of sub-populations of cells. In addition, due to the subjective aspect of the insulation construction and arrangement of cell vials, the freezing profiles obtained by this practice are variable both within and between laboratories.

A carefully engineered device provides a means for producing more consistent temperature reduction profiles through the use of a plastic container in which an inner receptacle is introduced for holding the specimen vials. Between the container inner walls and the receptacle, a volume of isopropyl alcohol is introduced and the unit is sealed with a screw-cap lid. The loaded assembly is then placed into a mechanical freezer compartment to initiate the freezing process. The alcohol surrounding the specimen vials acts as thermal mass of a magnitude such that the rate of heat transfer to the freezer interior produces the desired temperature reduction profile. The method, however, introduces various burdensome problems. The alcohol level must be properly maintained to achieve repeatable freezing profiles. In addition, the alcohol will absorb atmospheric moisture, thereby altering the heat content of the solution, thus introducing a requirement by the manufacturer that the alcohol be changed every five uses. The alcohol change requirement adds a reoccurring cost to the product in the form of the requirement for a supply of fresh alcohol and the cost of proper toxic waste disposal of the expired alcohol. The requirement for alcohol imposes a potential fire hazard during the alcohol exchange phase or in the event of spillage or breakage of the device. The relatively large thermal mass of the assembly also places a burden on the mechanical freezer causing a transient rise in the interior temperature of the freezer. If archival samples are present in the vicinity of the freezing unit, the samples may experience a thermal cycling that can contribute to premature degradation of the samples. The commercially available device also provides for the arrangement of the specimen vials in two concentric circles relative to the cylindrical axis. This arrangement of the vials imposes a variance in the temperature reduction profile for the inner vials as there is a longer path for the sample heat energy to traverse.

Therefore, there is a need for a passive temperature reduction device for freezing live specimen such as tissues, cells, organs, stem cells, blood, biopsies, cord blood, and other bodily fluids such as urine, nasal and spinal fluid that comprises a minimal thermal mass and that does not require solvent or other components which require replacement or refreshment. The passive temperature reduction device will place the samples in an exact geometrically equivalent position with respect to the insulation material between the sample vials and the device exterior creating an identical path for each sample for thermal energy flux, thereby providing identical temperature reduction profiles. The passive temperature reduction device may also comprise a central chamber into which exchangeable materials of selectable density, geometry, and heat capacity may be placed for the purpose of modifying and tuning the temperature reduction profile of the sample vial contents.

### SUMMARY OF THE INVENTION

Some aspects of the specimen freezing rate regulation device provide a method for controlling the temperature reduction rate of specimen vial contents. The device typically comprises a base container wherein receptacle cavities will accept the placement of specimen vials, and a cover which forms an upper seal for the specimen receptacle cavities.

Some embodiments of the device provide a specimen freezing rate regulation device comprising a cylindrical container constructed from an insulating foam material wherein a plurality of cylindrical specimen vial receptacle holes have been introduced in a radial pattern with the cylindrical axis of the receptacle holes parallel to and equidistant from the container axis and equidistant to the container exterior surface. An integral thickness of insulation material is present below the specimen container holes. The specimen receiver holes are exposed to the exterior for insertion and recovery of the specimen vials. The device further includes a cover that will engage the base in a manner that seals the specimen receptacle holes and provides an upper layer of insulating material.

In some embodiments, the base contains a central cavity that may contain air space. In other embodiments, the container central cavity may contain a material that will provide a quantity of thermal energy that will influence the rate of thermal energy reduction of the specimen vial contents during the temperature reduction process.

Further, in other embodiments the specimen freezing rate regulation device comprises a container in which the specimen vials are located within a central cavity. In some instances, the vials may be arranged in an array pattern. For example, in some embodiments the specimen freezing rate regulation device comprises a container with walls constructed from an insulating material that surrounds a central cavity, the device further including a base below the central cavity and walls that is constructed from a material that may differ from the wall material. In some embodiments, a specimen vial rack is contained within the central cavity for holding the specimen vials in a consistent position and orientation. Further, in some embodiments the device includes a cover that will close and seal the central cavity that is constructed from a material that may differ from the wall material. Still further, in some embodiments the device includes a thermally conductive layer interposed between the specimen vial rack and the base. In some embodiments, a thermally conductive layer is interposed between the sample vial rack and the cover, which may or may not be an integral feature of the cover.

In some implementations of the present invention, the base container further includes an outer shell and an inner liner whereby to protect the thermal insulating material of the apparatus. Some implementations of the present invention further include a base container incorporating a single or plurality of removable, annular inserts, wherein each annular insert is made of a material having a specific heat capacity and thermal conductivity. As such, a user may customize the cooling rate achievable by the apparatus by interchanging the annular inserts for a given application. Still further, in some implementations the annular insert comprises a plurality of insulating and conductive annular rings. With this arrangement, a user may mix-and-match the annular rings to create a desired cooling profile for the apparatus.

### BRIEF DESCRIPTION OF THE DRAWINGS

Figure 1 is a partially cross-section perspective view of a freezing rate regulator device in accordance with a representative embodiment of the present invention.
Figure 2, shown in parts A and B, provides various views of a freezing rate regulator device in accordance with a representative embodiment of the present invention.
Figure 3 is graphic representation of five consecutive specimen freezing cycles conducted using a freezing rate regulator device in accordance with a representative embodiment of the present invention, the figure illustrating the consistency of the specimen temperature reduction profiles produced by the device.
Figure 4 is a graphic representation of temperature reduction profile data as a function of central thermal ballast mass, obtained with a freezing rate regulation device in accordance with a representative embodiment of the present invention.
Figure 5 shows various views of the freezing rate regulator device of Figure 1 in accordance with a representative embodiment of the present invention.
Figure 6, as shown in parts A and B, provides various views of a freezing rate regulator device in accordance with a representative embodiment of the present invention.
Figure 7, as shown in parts A and B, provides various views of a freezing rate regulator device in accordance with a representative embodiment of the present invention.
Figure 8, as shown in parts A and B, provides various views of a freezing rate regulator device in accordance with a representative embodiment of the present invention.
Figure 9, as shown in parts A and B, provides various views of a freezing rate regulator device in accordance with a representative embodiment of the present invention.
Figure 10 is an exploded view of a conductive specimen freezing rate regulator device in accordance with a representative embodiment of the present invention.
Figure 11 is a cross-section perspective view of a conductive specimen freezing rate regulator device in accordance with a representative embodiment of the present invention.
Figure 12 is a cross-section perspective view of a conductive specimen freezing rate regulator device with protective liner in accordance with a representative embodiment of the present invention.
Figure 13 is a cross-section perspective view of a conductive specimen freezing rate regulator device with conductive insert in accordance with a representative embodiment of the present invention.
Figure 14 is a cross-section perspective view of a conductive specimen freezing rate regulator device with conductive and insulating rings in accordance with a representative embodiment of the present invention.
Figure 15 is a cross-section perspective view of a conductive specimen freezing rate regulator device in accordance with a representative embodiment of the present invention.

### DETAILED DESCRIPTION OF THE INVENTION

In biotechnical, clinical, scientific, medical and veterinary laboratories as well as biological and pharmaceutical production and archival facilities, common methods for long term preservation of cellular specimens involve the freezing of the cell specimen followed by storage at cryogenic temperatures. Although extremely rapid freezing or vitrification of a cellular sample is an effective method for freezing and recovering samples intact in a live condition, this method is only effective for samples restricted to a very small volume to minimize the sample heat content. However, for typical archival cell suspensions, much larger sample volumes, typically in the range of 0.5ml to 1.5 ml, are required. In sample volumes of this magnitude, the slower freezing rate favors the nucleation and growth of ice crystals in both the extracellular and intracellular fluid space. Intracellular ice crystal growth has been associated with damage to cellular organelles and structures resulting in cell death. If, however, the temperature reduction rate can be further reduced, cell survival rates following the freezing process improve.

By regulating the freezing rate, extracellular water will crystallize more gradually and in the process exclude salt and buffer solutes from the ice crystal lattice, concentrating the solutes in the remaining liquid phase. The concentrated solutes create an osmotic gradient across the cell membrane, thereby drawing out intracellular water. When the intracellular water content is reduced to a sufficient level, the remaining intracellular contents can solidify without the risk of the formation of extensive ice crystal structures that will fatally damage cellular organelles and structures. Alternatively, if the freezing rate is too slow, excessive concentration of solutes in the extracellular liquid phase can damage cell surface components again imposing a reduction is cell survival.

While the freezing rate which coincides with optimal percentage of surviving cells will vary from cell type to cell type, once the appropriate freezing rate for a particular cell type has been established, a simple duplication of the same temperature reduction profile for subsequent freezing processes will result in comparable survival rates. Therefore, devices which can provide reliable and consistent freezing rate profiles for specimen vials are of great value in that such devices allow the operator to cryogenically archive cell specimens with confidence that the cells will be recovered alive upon thawing.

Control rate freezers in which the temperature reduction profile is actively managed under the control of a microprocessor provide a very effective means of ensuring fidelity to the desired profile. The large cost of actively regulated freezing units limits the availability of the devices. Passive temperature reduction profile control devices that influence the rate of heat loss, and therefore regulate the temperature reduction profile of the cell samples, can provide a cost effective alternative to actively regulated freezing units. Passive freezing rate regulation devices, through a combination of construction material selection, design geometry, sample vial positioning, and material heat content, can produce a close approximation of the ideal freezing rate profile for a given cell type when the assembly is introduced into a cold environment such as is typically found in the interior of mechanical deep freezers.

In numerous laboratories, a common method for producing an effective freezing rate profile in specimen vials involves simply enclosing the vials in available insulating material such as styrene foam, paper towels, cardboard and paper tissue. Although cell samples frozen by these methods can contain an acceptable percentage of live cells upon thawing, the non-ideal freezing conditions can impose stresses upon the cell populations which will unintentionally select for the more stress-resistant subpopulations of the cells, leading to undesirable or misleading outcomes when the cells are used in downstream applications.

Commercially available passive freezing rate regulation devices provide a much more consistent sample temperature reduction profile, as the device geometry and heat capacity are more consistent and reproducible. Some embodiments of available passive devices provide a receptacle for the sample vials with the receptacle partially submerged in a tank of isopropanol contained in a plastic housing. A screw lid seals the assembly before the freezing cycle is initiated by placing the device in a mechanical deep freezer. Although effective in producing an acceptable freezing profile, devices of this construction method have undesirable aspects. The volume of the isopropanol contained within the device must be monitored and adjusted to the proper level. In addition, the isopropanol will absorb atmospheric moisture, thereby altering the heat capacity of the solution and changing the temperature reduction profile of the device. As a consequence, the manufacturer recommends that the isopropanol be exchanged for fresh 100% isopropanol every 5 uses of the device. The incurrent cost of the replacement solvent in addition to the expense of proper disposal of the solvent into accepted toxic waste streams supports the desirability of a solvent-free alternative. The large thermal mass of the isopropanol in relation to the lesser thermal mass of the samples also places a burden upon the cooling mechanism of the freezer into which it is placed. As the heat content of the device assembly must be dissipated through the local freezer environment, archival samples stored in the vicinity will experience a rise in temperature. Transient and cyclic changes in temperature are a known factor contributing to the degradation of biological samples.

Clinical investigations and trials and less frequently clinical therapy and basic research require or include dispersed sites of operation, and a range of considerations may be necessary including the need for standardized protocols, methods and devices to ensure reproducible results (e.g. PCR, ELISA, FACS, cell or pathway signaling, cell proliferation, cell adhesion and migration, stem cell pluri-potency, cytokine expression and secretion, biomarker expression) and consistent and successful therapeutic outcome. Site to site or even same site variance in cryopreservation frequently occurs because even subtle differences in methodology or type or use of devices can result in variable freezing rates and can easily go unnoticed and unrecorded, and the variance can negatively impact clinical, diagnostic or experimental outcome.

Cell cryopreservation is the use of very low temperatures to preserve structurally intact living mammalian or non-mammalian cells. Cells are cryopreserved to avoid loss by contamination, to minimize genetic change in continuous cell lines, and to avoid transformation in finite cell lines. The cells which survive the thermodynamic journey from the warm incubator to the -196°C liquid nitrogen storage tank are free from the influences of time and thus cryopreservation is a critical component of cell culture. Established cell lines are a valuable resource and replacement is expensive and time consuming. Successful cryopreservation of cells requires not only that the cells be handled in a proper fashion for harvesting but also that a correct choice and amount of cryoprotective agent is added, a solid controlled rate of freezing is used, and that a standardized storage method of cells under cryogenic conditions is applied.

The leading method for preserving living cell specimen material for later analysis is controlled-rate and slow freezing, also called slow programmable freezing (SPF). Passive controlled freezing devices or cell freezing containers or actively controlled freezing devices that freeze biological samples using programmable steps both use controlled freezing rates (e.g. -1C/min), and both have been used all over the world for human, animal, plant, synthetic and cell biology - 'freezing down' a sample to better preserve it for eventual thawing or deep freezing, or cryopreservation in liquid nitrogen. The ideal device should exhibit even and reproducible freezing rates without maintenance (e.g. monitoring of fluid levels or change of fluids or solvents) and without variability in the heat removal capacity through fluid evaporation spillage, or moisture uptake; all of which will alter the performance of the device.

Such devices or containers are used for freezing oocyte, skin, human and animal blood products (e.g. PBMCs, dendritic cells, T cells, B cells, macrophages, monocytes), bone marrow cells, embryo, sperm, stem cells and tissues (e.g. lung-, colon-, brain-, skin, nerve--tissue, tissue or cell biopsies, hair follicles) for general tissue preservation in hospitals, clinics, clinical sites, diagnostic labs, CROs, veterinary practices and biotechnology, pharmaceutical or academic research or drug discovery and development labs around the world. For cryo-preservation of certain non-mammalian cells, using a controlled standardized freezing rate (e.g. -1C/minute) is also highly recommended. Typical non-mammalian cell samples are derived from plants or plant cultures, microbes or microbiological cultures (e.g. bacterial, viral, fungus, and insects) and from yeast or yeast cultures. Non-mammalian cells are used in basic and clinical research, in synthetic biology, clinical or veterinarian therapy, in the biofuel or alternative energy industry.

Devices and apparatuses of the present invention provide similar or identical temperature reduction profiles to those obtained by commercially available isopropanol-based passive temperature regulation devices and other SPF devices and methods. Some devices of the present invention comprise a cylindrical container into which a radial arrangement of receptacle holes are present for the purpose of receiving sample tube vials. The container houses a central, coaxial chamber and is closed with an insulation cover that seals the tube receptacles and engages and seals the central chamber. Sample vials can be inserted and enclosed by engaging the cover pedestal in the central chamber cavity thereby effectively sealing the vials in the individual chambers. When placed into an environment with a lower temperature, such as a deep freezer, the insulation surrounding the vials will provide for a controlled reduction in temperature of the sample vials. The rate of the temperature reduction can be adjusted by increasing or decreasing the thickness of the insulation layer surrounding the samples. Devices of the invention may also provide for a secondary means of controlling the temperature through the inclusion of a thermal ballast mass placed in the central, coaxial chamber of the container. During the freezing process, the heat energy content of the thermal ballast mass will be conducted partially through the samples contained in the surrounding receptacle chambers, thereby altering the temperature reduction profile of the vial contents.

The present invention will be described with regard to the accompanying drawings which assist in illustrating various features of the invention.

As used herein, the terms "sample vials" and "specimen vials" are used interchangeably to refer to various commercially available tubes with enclosure caps, typically constructed from plastic materials, that are intended for containing primarily, but not exclusively, liquid contents, and which are intended for storage of the contents in a range of temperatures extending to cryogenic temperatures.

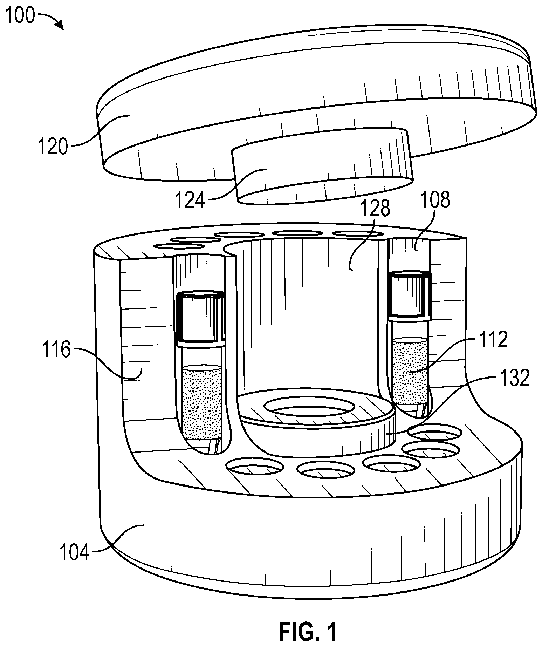

Some of the features of the invention are generally illustrated in Figure 1 which is provided for the purpose of illustrating the practice of the invention and which does not constitute limitations of the scope thereof.

Referring to Figure 1, the specimen freezing rate regulator device 100 comprises a container or enclosure 104 into which a series of receptacle holes or specimen containment chambers 108 have been introduced for the purpose of housing the sample vials 112. In some embodiments, enclosure 104 comprises a cylindrical insulation base. The array of receptacle holes is arranged in a radial pattern in relation to the cylindrical axis of the container. Surrounding the receptacle hole array is a uniform layer of insulation material 116. A removable cover 120 seals the upper end of the receptacles and engages the container by means of a central protrusion 124 that extends into the central cavity of the container 128 and mates with a friction fit at the wall of the cavity. In some embodiments, a central mass thermal ballast 132 is provided to modify and adjust the temperature reduction profile of the tubes during the freezing process. In some embodiments, the thermal ballast is coaxially positioned within ballast chamber 128 such that thermal ballast 132 is thermally coupled to at least one of the specimen chamber 108, the enclosure 104, the specimen sample 112, the ballast chamber 128, and the cover 120.

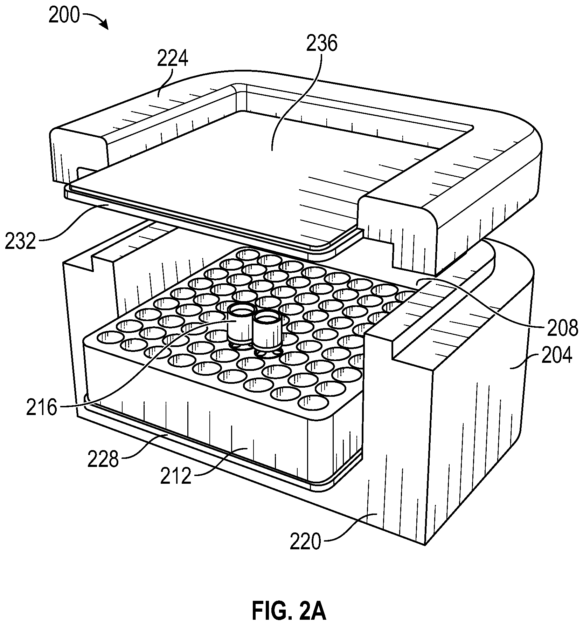

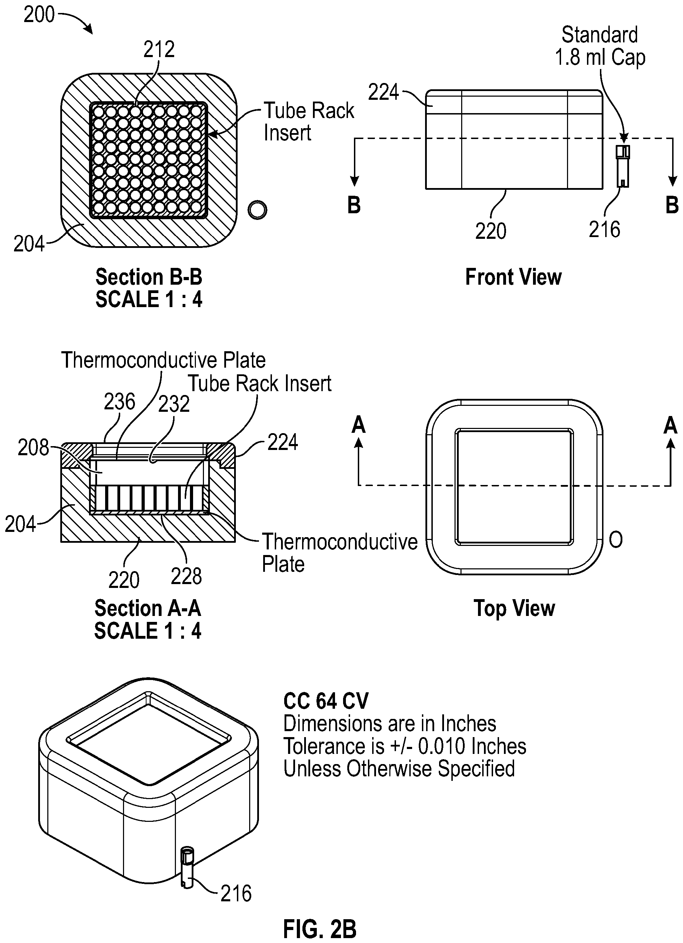

Some of the features of the second embodiment of the invention are generally illustrated in Figures 2A and 2B which are provided for the purpose of illustrating the practice of the invention and which do not constitute limitations of the scope thereof.

Referring now to Figures 2A and 2B, the specimen freezing rate regulator device 200 comprises four lateral walls constructed from an insulating material 204 which surrounds and contains a central cavity 208. The central cavity receives a specimen tube rack 212 that positions and retains an array of specimen sample vials 216. The lateral insulation walls are bordered on the underside by a thickness of a material 220 which may be identical to the material from which the lateral walls are constructed or may be constructed from a different material. The upper sides of the lateral walls are bordered by a partial cover 224 which acts as a removable continuation of the lateral walls and which may be identical to the material from which the lateral walls are constructed or may be constructed from a different material.

In some embodiments, partial cover 224 houses an upper thermoconductive layer 232. Directly under the specimen tube rack 212 is placed a layer of thermoconductive material 228 which serves to uniformly distribute the thermal energy present in the central cavity 208. Directly above the specimen tube rack 212 is placed a layer of thermoconductive material 232 that acts to radiate the heat contained within the central cavity to the exterior. In some embodiments, a layer of insulation 236 is provided to cover upper thermoconductive layer 232 and modify the rate at which thermal energy is conducted from the thermoconductive material 232 to the surrounding environment. Further, in some embodiments the thermoconductive materials 228 and 232 are interposedly positioned between the specimen chamber and at least one of the enclosure and the cover, such that at least one of the thermoconductive materials are in thermal contact with at least one of the insulation materials 116, 220, 224 and 236.

In some embodiments, insulation materials 116, 220, 224 and 236 are constructed as both integral structural features and as insulating materials to their respective devices 100 and 200. In other embodiments, insulation materials 116, 220, 224 and 236 comprise a material such as, but not limited to, uniform density cross-linked closed-cell polyethylene foam rubber, uniform density polystyrene foam, closed-cell polyurethane foam materials, and combinations thereof. In some embodiments, an open-cell insulation material is utilized. In other embodiments, the insulating material comprises at least one of a solid foam material and a synthetic material. Further, in some embodiments, device 100 and 200 further comprises an exterior insulating material to reduce heat transfer to and from the operator during physical contact. Still further, in some embodiments an exterior insulating material is selected to prevent, reduce, remove, and/or absorbed moisture, such as condensation, from an external surface of the device.

In some embodiments, central ballast material 132 is constructed from a range of materials including, but not limited to, metals, metal alloys, ceramics, sealed liquid containers, plastics, glass, cast materials such as waxes, and synthetic materials such as silicone. In some embodiments, thermoconductive layers 228 and 232 comprise materials such as, but not limited to, metals and metal alloys, ceramics, plastics and plastic compounds. Further, in some embodiments specimen tube rack 212 comprises materials such as, but not limited to, polyethylene open cell foam, polyethylene closed cell foam, plastic or synthetic foam materials such as urethane foam, cardboard, metal, metal alloys, and solid or mesh plastics or synthetic material

### EXAMPLES

### Experiment 1: Repeatability of Specimen Freezing Cycle

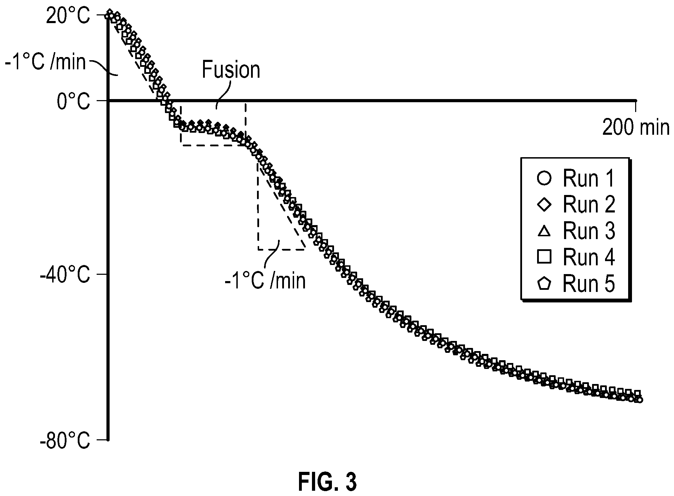

With reference to Figure 3, the results from an experiment are shown. This experiment was conducted using a prototype device 100 as shown in Figure 1. The device 100 was loaded with 12 specimen vials containing 1ml of cryoprotectant solution each. The device 100 was then closed by replacing the cover, and the device and cover were placed in a -80°C freezer compartment. The cryoprotectant load of one vial was monitored using a thermocouple probe introduced through the cover of the device and through the screw-cap lid of the specimen vial. The temperature of the cryoprotectant solution was recorded using an electronic data recorder that collected sample data at 10 second intervals. Following a four hour interval, the assembly was removed from the freezer disassembled and the device and sample vials re-equilibrated to 20°C. The sample vials were re-loaded and the freezing cycle described was repeated a total of 5 times. The combined graphic plots of the temperature reduction profiles of the sample tube contents reveals that very consistent and reliable profiles are produced when the device is used under the same physical conditions.

### Experiment 2: Specimen Freezing Rate Regulator with Central Ballast Mass

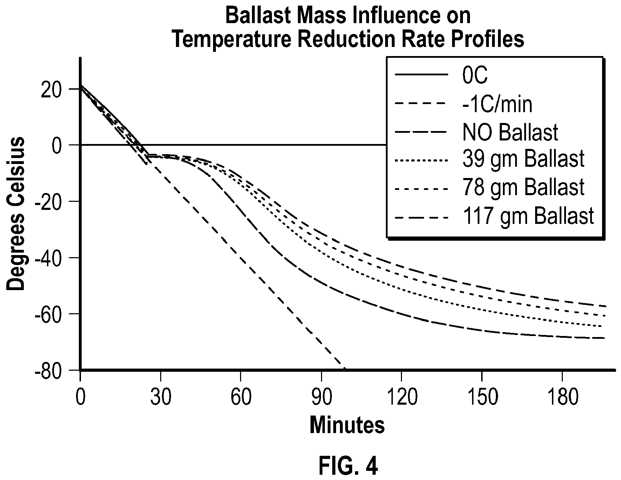

With reference to Figure 4, the results from an experiment are shown. This experiment was conducted using a prototype device 100 with and without a ballast 132, as shown in Figure 1. The device 100 was loaded with 12 specimen vials containing 1ml of cryoprotectant solution each, then closed by replacing the cover after which the assembly was placed in a -80°C freezer compartment. The cryoprotectant load of one vial was monitored using a thermocouple probe introduced through the cover of the device and through the screw-cap lid of the specimen vial. The temperature of the cryoprotect solution was recorded using an electronic data recorder that collected sample data at 10 second intervals. Following a four hour interval, the assembly was removed from the freezer disassembled and the device and sample vials re-equilibrated to 20°C.

Four separate freezing cycles are shown in which the central cavity of the device contained no additional thermal ballast mass, or contained a ballast mass of 39gm, 78gm, or 117gm. Shifts in the temperature reduction rate plot were observed by changing the thermal mass present in the central cavity, as shown in Figure 4. Accordingly, the present experiment demonstrates the effectiveness of the temperature profile modification feature of the invention.

### Example 1: Specimen Freezing Rate Regulator Device

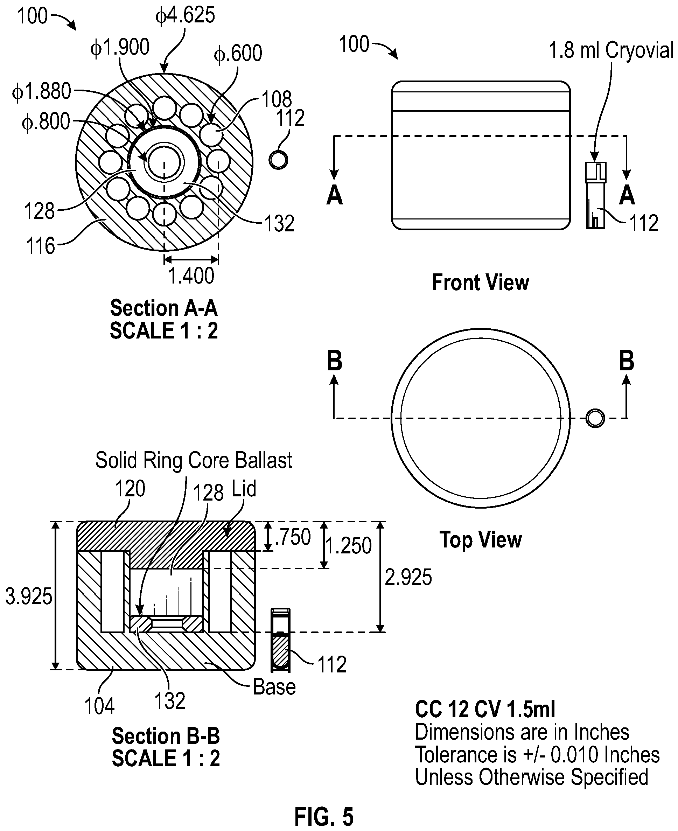

The device represented in Figure 1 may be constructed using a range of feature dimensions to provide the desired freezing rate for a specified sample vial number and vial payload. The device shown In Figure 1 is designed to receive 12 vials of a class typically referred to as cryovials that have a nominal cylindrical diameter of 0.5 inches and a nominal length of 1.9 inches. The dimensions of the device in Figure 1, as shown in Figure 5, when constructed from 4-pound per cubic foot density polyethylene foam, will provide a freezing rate of -1 degree Celsius per minute as determined by the slope of the temperature versus time freezing profile in the temperature region that proceeds the phase change of the aqueous freezing media (typically in the range of 20 degrees to -3 degrees Celsius as shown in Figure 3), when placed into a -75 degree Celsius environment. As the freezing rate is determined by the insulation thickness and distribution of the thermal energy contained in all components, multiple combinations of device dimensions could be expected to provide the desired freezing rate profile for the sample payload. The device 100 shown in Figure 5 represents only one of a number of dimension combinations that will achieve the target freezing rate, and is therefore presented as a representative solution and is not intended to exclude other dimension combinations that would deliver the desired result.

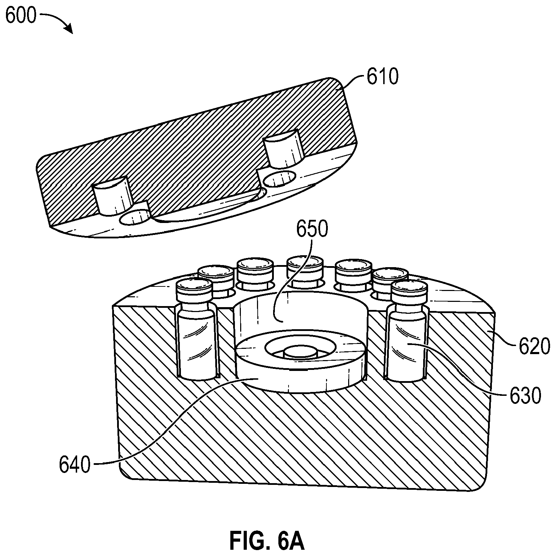

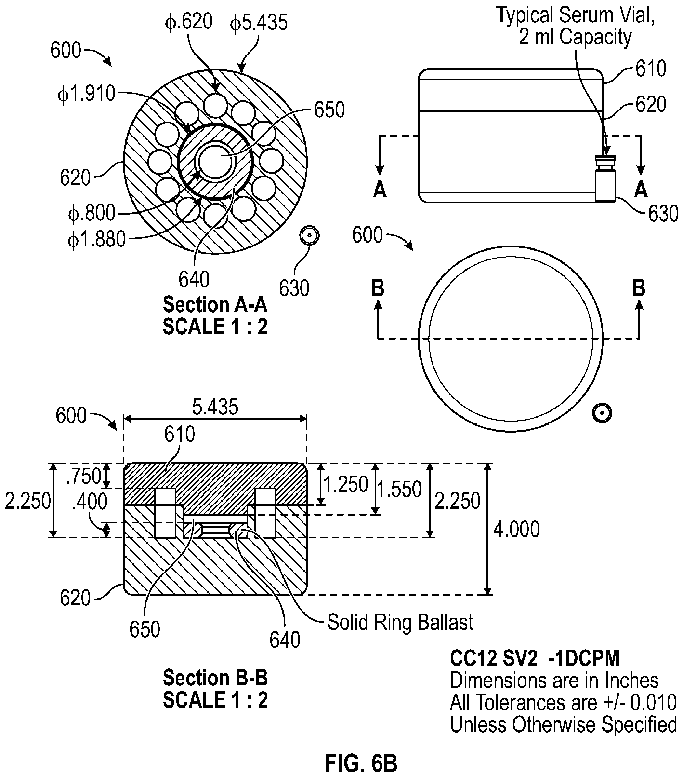

The device of the present invention can be configured to provide the desired freezing rate profile regardless of the sample vial size or vial construction material. With reference to Figures 6A and 6B, a device is shown that has been designed to receive twelve plastic serum vials that have a nominal diameter of 0.59 inches and a minimum height of 1.4 inches and have a 2 ml capacity. When the vials are loaded with 1 ml of cell freezing media and enclosed in the device, which is then subsequently placed into a -75 degree Celsius environment, the vial contents will undergo a temperature reduction rate of -1 degree Celsius per minute. The device components are direct counterparts to the design shown in figure 1. The device 600 consists of a base 620 and a lid 610, both being constructed from a high density polyethylene foam. The vials 630 are contained in a radial array surrounding a central cavity 650 that contains a solid core ballast ring 640 to add thermal mass for the purpose of freezing profile adjustment. A non-limiting set of dimensions for device 600 is provided in Figure 6B.

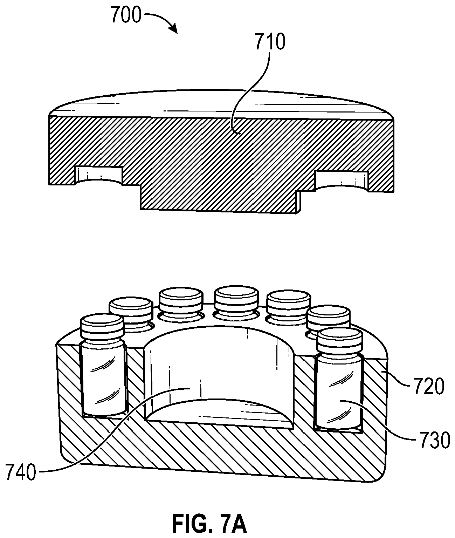

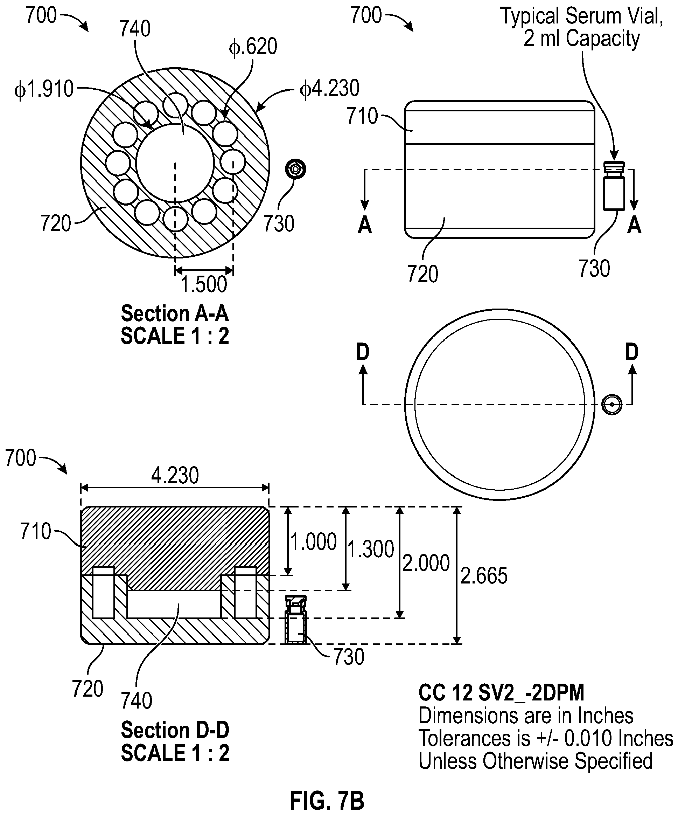

A third embodiment of the designs shown in Figures 1, 5, 6A, and 6B is shown in Figures 7A and 7B. In this embodiment, the dimensions of device 700 have been adjusted so that when twelve serum vials 730 of 2 ml capacity, loaded with 1 ml of freezing medium each are enclosed in the device and then placed into a -75 degree Celsius environment, a freezing rate of -2 degrees Celsius per minute is achieved, as determined by the slope of the freezing profile in the range of 20 degrees to 0 degrees Celsius. In this device 700, the wall thickness of the base 720 is reduced as is the base floor thickness and the lid 720 thickness when compared to the device 600 in Figure 6. For this device, the central solid core ballast is omitted and the central cavity 740 is empty. A non-limiting set of dimensions for device 700 is provided in Figure 7B.

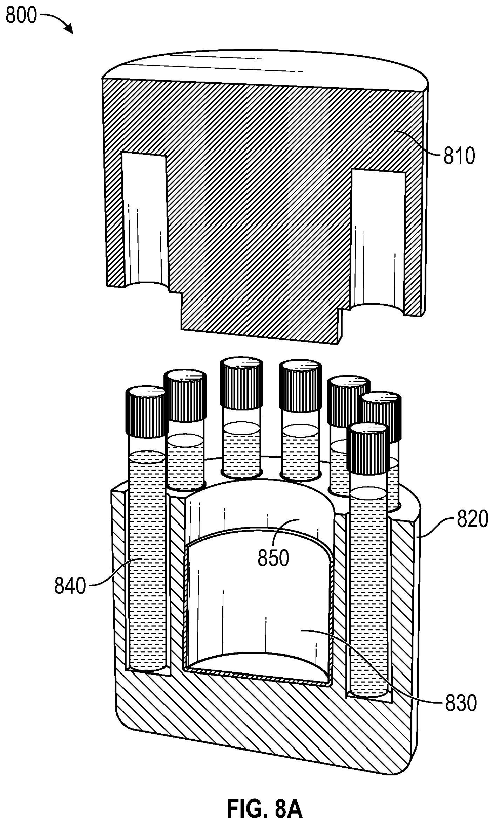

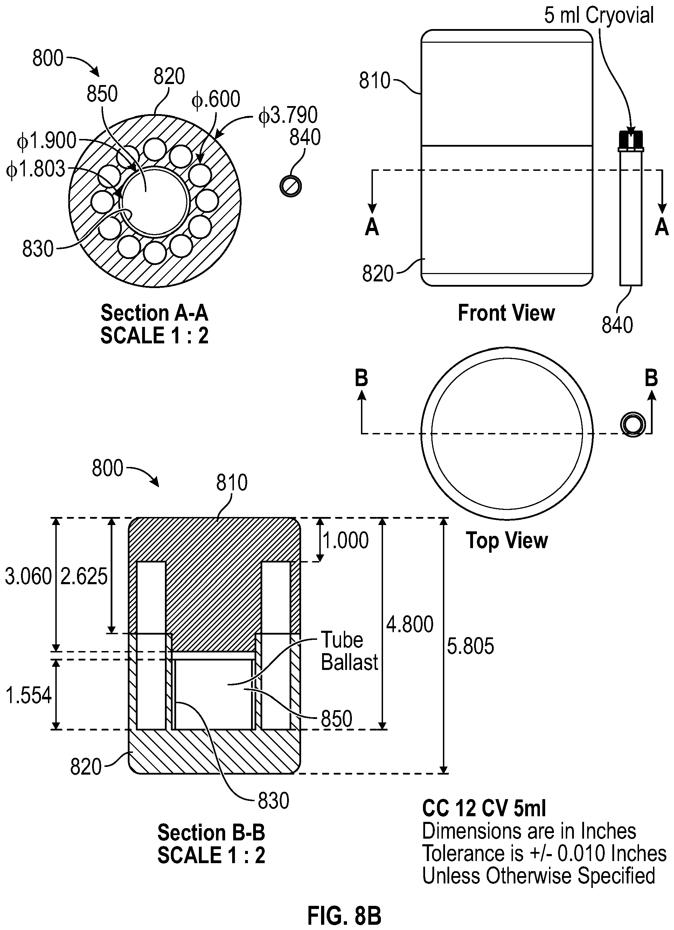

With reference to Figures 8A and 8B, a fourth embodiment of the invention 800 is shown with the dimensions configured to freeze the contents of twelve 5 ml capacity cryogenic sample storage vials 840 with a nominal diameter of 0.5 inches and a nominal length of 3.57 inches. When the vials are loaded with a volume of 4 ml of freezing media each, the twelve vials may be inserted into the wells surrounding the central cavity 850 which receives the tubular ballast 830. The base 820 and lid 810 may then enclosed the vials and when the assembly is placed into a -75 degree Celsius environment, an initial freezing rate of -1 degree Celsius per minute may be obtained. A non-limiting set of dimensions for device 800 is provided in Figure 8B.

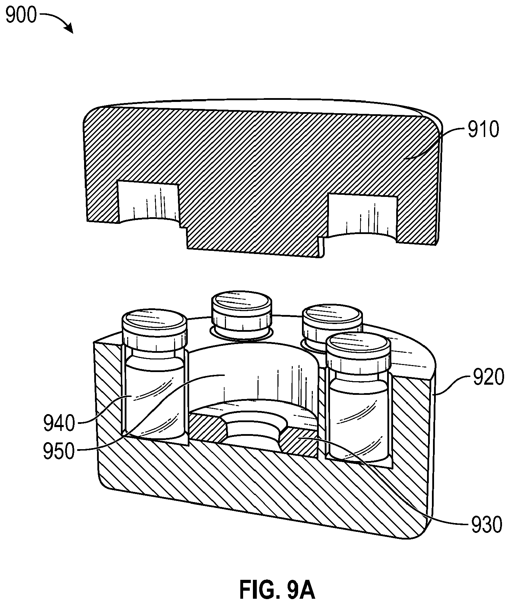

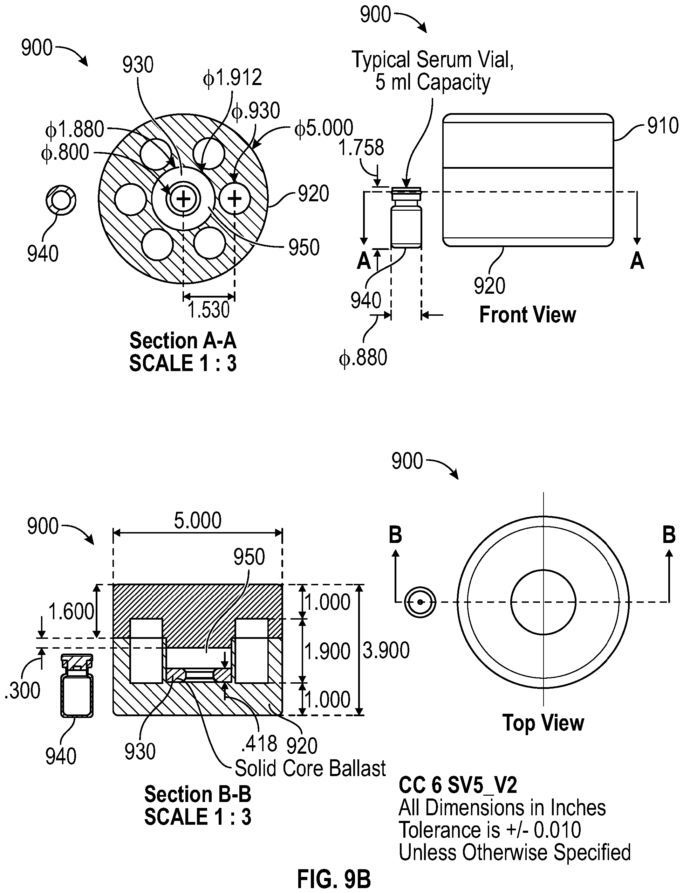

A fifth embodiment of the invention is shown in Figures 9A and 9B. In this embodiment 900, a collection of six 5 ml capacity serum vials 940, with a nominal diameter of 0.88 inches and a nominal height of 1.76 inches may be each filled with a load of 5 ml of cell freezing medium and placed in wells of the base 920. The vial wells surround a central cavity 950 that contains a solid ring core ballast 930. When the vials are enclosed by affixing the lid 910, the assembly may be placed into a -75 degree Celsius environment to obtain an initial freezing rate of -0.8 degrees Celsius per minute. A non-limiting set of dimensions for device 900 is provided in Figure 9B.

### Example 2: Conductive Sample Cooling Apparatus

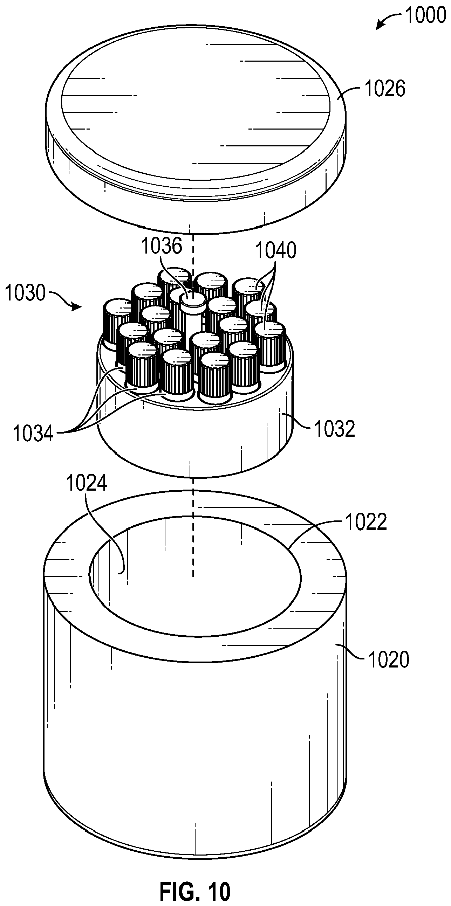

Referring now to Figure 10, a sample cooling apparatus 1000 is shown. In some embodiments, sample cooling apparatus 1000 comprises a base container 1020 having an opening 1022 and inner compartment 1024 into which a vial holder 1030 is inserted. In some embodiments, apparatus 1000 further comprises a lid 1026 for enclosing base container 1020.

In some embodiments, base container 1020 comprises a thermal insulating material whereby to maintain a desired temperature within inner compartment 1024. Non-limiting examples of thermal insulating material include an expanded polystyrene material, an expanded polyurethane material, an expanded polyvinylchloride material, an expanded polyethylene material, an expanded a silicone rubber material, polyethylene open cell foam, polyethylene closed cell foam, plastic or synthetic foam materials such as urethane foam, cardboard, metal, metal alloys, and solid or mesh plastics or synthetic materials, a polypropylene material, and other compatibly polymer materials known in the art. Further, in some embodiments base container 1020 comprises a closed-celled polymer material, such a polyethylene foam material or polyurethane foam material. In some embodiments, base container 1020 and lid 1026 comprises an expanded polystyrene material.

The size, thickness and overall dimensions of base container 1020 are generally selected based upon an application of use and may be adjusted as needed to accommodate housing of vial holder 1030. In some embodiments, the dimensions of base container 1020 are selected so as to accommodate a single vial holder 1030. In other embodiments, a base container 1020 is provided having dimensions to accommodate more than one vial holder 1030. Further, in some embodiments base container 1020 is rectangular-shaped, and thereby compatible for receiving rectangular-shaped sample containers, such as a 96-well PCR plate.

In some embodiments, base container 1020 and lid 1026 are manufactured using a standard injection molding procedure. In other embodiments, base container 1020 and lid 1026 are machined or molded to provide the final product. In some embodiments, various portions of container 1020 and lid 1026 are provided independently and then subsequently joined by at least one of an adhesive, an epoxy, mechanical friction, a plastic weld, or other joining methods and techniques known in the polymer manufacturing industry.

Vial holder 1030 generally comprises a base 1032 having a plurality of receptacle holes 1034 for receiving individual vials 1040. One having skill in the art will appreciate that base 1032 may be modified to include additional holes or openings designed to receive additional containers, such as sample plates, tissue sample containers, microcentrifuge tubes, low-profile containers, and the like, as may be used in the art. In some embodiments, receptacle holes 1034 comprise a width and depth approximately equal to the width and length of vials 1040. As such, samples stored within vials 1040 are positioned entirely within vial holder 1030 when vials 1040 are inserted within receptacle holes 1034. This configuration results in more consistent thermal distribution across each vial, both axially and circumferentially, while stored in vial holder 1030.

In some embodiments, base 1032 comprises a thermally conductive material by which thermal energy within the samples stored in vials 1040 is rapidly and efficiently transferred from the vials 1040 inserted within receptacle holes 1034. Non-limiting examples of thermally conductive materials in accordance with the present invention include aluminum, gold, copper, silver, graphene, and alloys thereof. Further non-limiting examples of thermally conductive materials include metals, metal alloys, ceramics, sealed liquid containers, plastics, plastic compounds, glass, cast materials such as waxes, and synthetic materials such as silicone. In some embodiments, vial holder 1030 includes a base 1032 comprised of a 6061 aluminum alloy material.

In some embodiments, base 1032 further comprises a handle 1036 whereby to remove vial holder 1030 from inner compartment 1024 of base container 1020. Handle 1036 is generally positioned so as to enable easy access to handle 1036. For example, in some embodiments handle 1036 is modified to extend above vials 1040. In other embodiments, handle 1036 is modified to be flush with the top of vials 1040. Further, in some embodiments two or more vial positions adjacent to handle 1036 are eliminated or modified to provide finger access to vial holder 1030 and/or handle 1036. In some embodiments, handle 1036 is comprised of the same conductive material as vial holder 1030. In other embodiments, handle 1036 comprises a nonconductive material such that handle 1036 remains thermally insulated from vial holder base 1032.

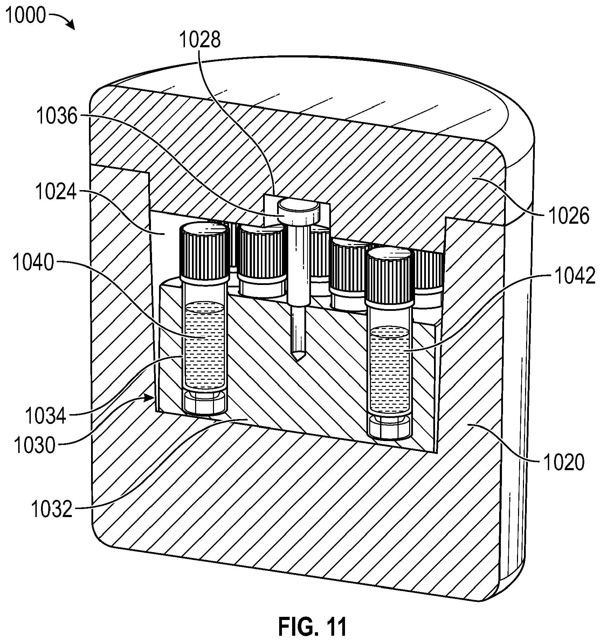

Referring now to Figure 11, a cross-section view of sample cooling apparatus 1000, is shown. In some embodiments, lid 1026 is configured to partially insert within inner compartment 1024 of base container 1020. As such, the inner volume of inner compartment 1024 is reduced which limits the volume of space thermally regulated by conductive base 1032. In some embodiments, a recess 1028 is provided in an interior surface of lid 1026 to accommodate handle 1036 when lid 1026 is positioned on base container 1020. Recess 1028 thereby permits lid 1026 to be further inserted into inner compartment 1024, thereby further reducing the volume of space between vials 1040 and the interior surface of lid 1026.

As previously discussed, in some embodiments the depth and width of receptacle holes 1034 are provided such that a sample level 1042 within vials 1040 is positioned entirely within receptacle holes 1034. As such, base 1032 completely contains sample 1042 thereby ensuring that the temperature within each individual vial is more consistent, both axially and circumferentially.

In some embodiments, sample vials 1040 are placed into receptacle holes 1034 of vial holder 1030 prior to cooling the holder. Once the vials have been positioned within the vial holder 1030, the vial holder is placed in a cooled environment (such as liquid nitrogen or a sub-zero freezer) or onto a cooling plate. The thermally conductive nature of the vial holder 1030 rapidly and evenly distributes the thermal energy from the each of the samples within the vials 1040 to the cooled environment, thereby producing consistent cooling profiles for each of the vials stored within vial holder 1030.

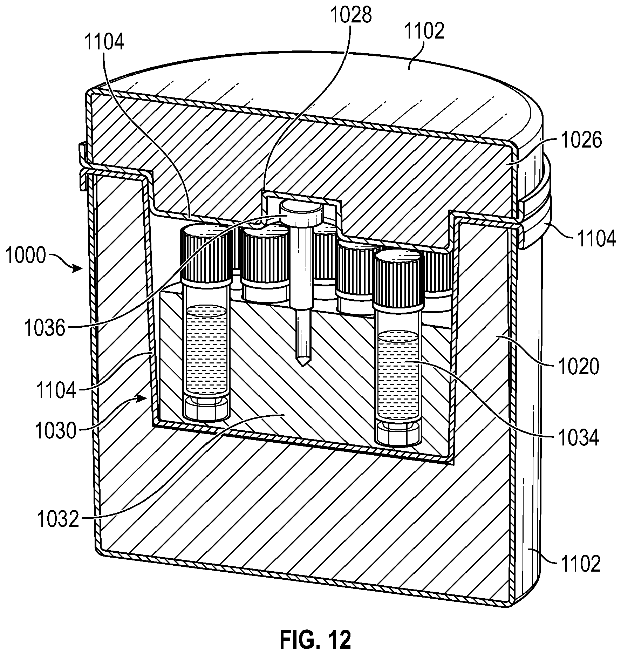

Some of the features of the invention are generally illustrated in Figure 12 which is provided for the purpose of illustrating the practice of the invention and which do not constitute limitations of the scope thereof.

Referring now to Figure 12, the sample cooling apparatus 1000 further comprises an outer shell 1102 and an inner liner 1104. Outer shell 1102 and inner liner 1104 generally comprise a non-porous polymer material that is easily cleaned following use of the apparatus. For example, in some embodiments outer shell 1102 and inner liner 1104 are effectively cleaned with at least one of an alcohol, a soap solution and/or a disinfectant preparation following use. In addition, the outer shell 1102 provides improved durability to the base container 1020 and lid 1026 to resist mechanical abrasion and impact.

In some embodiments, base container 1020 is modified to include an inner liner 1104 and outer shell 1102. In other embodiments, base container 1020 is modified to include only an inner liner 1104 or only an outer shell 1102. Further, in some embodiments base container 1020 and lid 1026 are both modified to include an outer shell 1102 and an inner liner 1104, as shown. Thus, outer shell 1102 and inner liner 1104 may be interchangeably implemented to protect or enhance the usability of one or more of the components of the apparatus 1000.

Shell 1102 and liner 1104 may be produced by various processes including, but not exclusively limited to, vacuum forming, rotational molding, blow molding, blown in-place techniques, and injection molding using various polymer materials. For example, in some embodiments, outer shell 1102 and inner liner 1104 comprise a closed-celled polymer material that is molded and/or formed to contour to the inner or outer shape of cooling apparatus 1000. In other embodiments, shell 1102 and liner 1104 comprise a thermoplastic material that has been shaped via injection molding to retain a form that compatibly surrounds lid 1026 and base container 1020. In other embodiments, shell 1102 and liner 1104 comprise a thermoset material. Further, in some embodiments outer shell 1102 and inner liner 1104 are combined to form a clamshell enclosure that securely envelopes base container 1020 and lid 1026. Still further, in some embodiments base container 1020 and lid 1026 are coated with a polymer material thereby forming a barrier which seals and protects the thermal insulating material from which the components are made.

In some embodiments, outer shell 1102 is further modified or molded to include integral features such as feet, hooks, tabs, loops, straps, stacking/nesting features, and the like to further enhance the usefulness of the apparatus 1000. In other embodiments, outer shell 1102 is further modified or molded to include a textured surface or coating to facilitate a user in gripping the apparatus 1000.

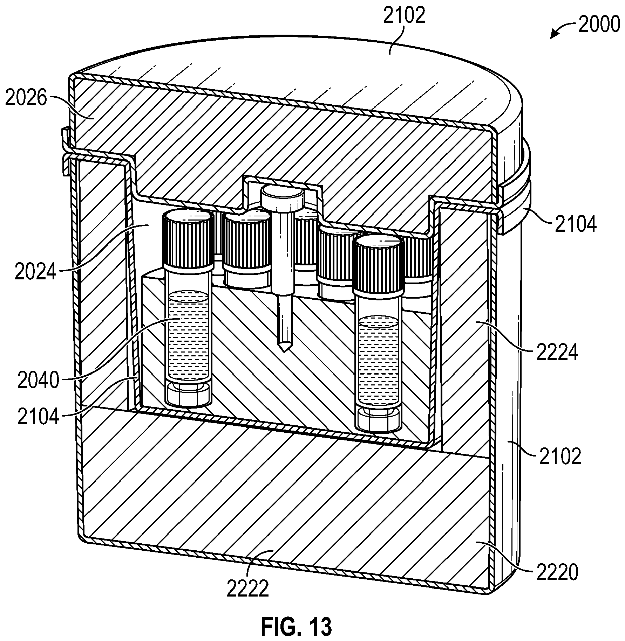

Some of the features of the third embodiment of the invention are generally illustrated in Figure 13 which is provided for the purpose of illustrating the practice of the invention and which do not constitute limitations of the scope thereof.

Referring now to Figure 13, sample cooling apparatus 2000 is shown. In some embodiments, base container 1020 is replaced with a modular base container 2220 comprising a base platform 2222 and a removable annular insert 2224. Generally, base platform 2222 comprises a thermal insulating material, as discussed above. In some embodiments, removable, annular insert 2224 comprises a thermal conducting material which is positioned within outer shell 2102 adjacent to inner compartment 2024. In some embodiments, annular insert 2224 comprises a plurality of inserts having various thermal conductivity values, wherein a user may substitute one annular insert for a second annular insert to customize the rate of cooling for the apparatus 2000. For example, where a user desired to slow the rate of cooling for the sample vials 2040, the user may place an annular insert 2224 within modular base container 2220 that is less thermally conductive than another annular insert. Conversely, a user may increase the rate of cooling for the apparatus 2000 by placing an annular insert 2224 within the modular base container 2220 that is more thermally conductive. In some embodiments, modular base container 2220 is sealed, wherein an annular insert 2224 is selected and permanently enclosed within outer shell 2102 and inner liner 2104 thereby permanently establishing a thermal conductivity for the apparatus 2000. Accordingly, in some embodiments a specific apparatus 2000 is provided having a dedicated thermal conductivity for a desired application or use.

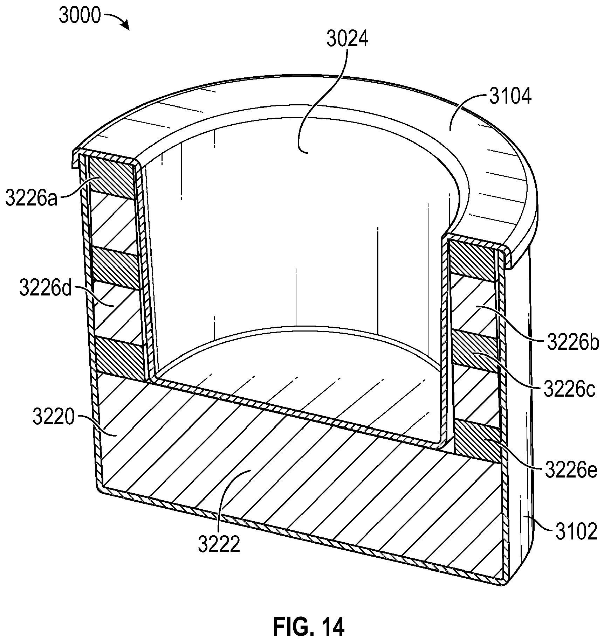

Some of the features of the fourth embodiment of the invention are generally illustrated in Figure 14 which is provided for the purpose of illustrating the practice of the invention and which do not constitute limitations of the scope thereof.

Referring now to Figure 14, a sample cooling apparatus 3000 is shown. In some embodiments, an annular insert is provided comprising a plurality of annular inserts 3226a to 3226e. In some embodiments annular inserts 3226a to 3226e comprise conductive materials (3226a, 3226c, 3226e) and insulating materials (3226b, 3226d) which may be combined and arranged to achieve a desired cooling rate. In some embodiments, a mix-and-match arrangement is provided wherein the user is provided with a plurality of conductive annular rings and a plurality of insulating annular rings, whereby the rings may be combined within the apparatus 3000 to achieve a desired cooling profile. This mix-and-match arrangement thereby provides a wider range of conductivity for the apparatus 3000.

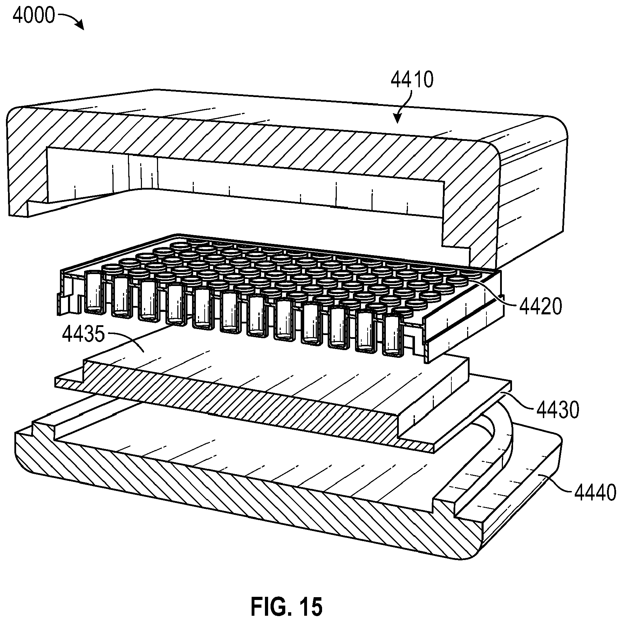

Some of the features of the fifth embodiment of the invention are generally illustrated in Figure 15 which is provided for the purpose of illustrating the practice of the invention and which do not constitute limitations of the scope thereof.

Referring now to Figure 15, a sample cooling apparatus 4000 is shown. In some embodiments, the apparatus can be used to cool a plurality of samples contained in multiple well microplate configurations. In some embodiments an insulating housing comprising an insulating base 4440 and an insulating lid 4410 enclose a multi-well microplate 4420 supported by a stage 4430 which is constructed from a thermally conductive material for the purpose of maintaining an equal temperature in all wells in the microplate. In some embodiments the stage 4430 includes an adaptor interface to minimize the gap between the upper surface of the stage and the underside of the microplate. In other embodiments, the stage surface is contoured to receive an array of tubes.

The device of the present invention can be used to properly prepare cell suspension samples for cryogenic storage by providing the appropriate temperature reduction rate profile during the freezing process. For example, the device can be used to freeze any cell suspension in which the optimal temperature reduction rate for the specific cell population coincides with the freezing rate specification to which the specimen freezing rate regulator device has been constructed to provide.

Typically, the freezing rate regulator device of the present invention would be equilibrated to the temperature at which the loaded specimen vials are maintained prior to the initiation of the freezing process. The cover of the device would be removed and the specimen vials loaded into the receptacle holes. The cover would be replaced and the device assembly would be placed into a -80°C freezer and enclosed undisturbed for a period of greater than 4 hours. The device assembly would then be recovered, the cover would be removed and the container inverted to recover the frozen vials. The vials would be immediately transferred to an archival cryogenic storage container system or cooled by material phase change, such as by being placed onto a layer of dry ice or into a container of liquid nitrogen, for more extended transfer time intervals prior to archival storage. The freezing rate regulator device would then be allowed to equilibrate to the starting temperature once again prior to initiation of a subsequent freezing cycle.

In some embodiments, the freezing rate regulator device is use to preserve a wide variety of cultured mammalian and non-mammalian cells including, but not limited to, primary cell cultures, established immortalized cell lines, stem cell lines, and isolated blood cells.

In some embodiments, a thermal regulating device is provided or manufactured by first providing a thermally insulated specimen chamber into which a specimen sample may be loaded. The specimen chamber is then encased within an insulation base, the insulation base being comprised of an insulating material. The thermal regulating device is further manufactured by providing a cover for the insulation base, the cover being removably coupled to the insulation base and forming a thermal seal between the specimen chamber and the cover. In some embodiments, a thermal ballast is further provided such that the thermal ballast is in thermal contact with at least one of the insulation base, the specimen chamber, the specimen sample, and the cover.

The foregoing discussion of the invention has been presented for purposes of illustration and description. The foregoing is not intended to limit the invention to the form or forms disclosed herein. Although the description of the invention has included description of one or more embodiments and certain variations and modifications, other variations and modifications are within the scope of the invention, e.g., as may be within the skill and knowledge of those in the art, after understanding the present disclosure. It is intended to obtain rights which include alternative embodiments to the extent permitted, including alternate, interchangeable and/or equivalent structures, functions, ranges or steps are disclosed herein, and without intending to publicly dedicate any patentable subject matter.

### FURTHER ASPECTS

1. A specimen freezing rate regulator device, comprising:
   an enclosure comprising an insulating material, the enclosure having an opening;
   a specimen chamber disposed within the enclosure, the specimen chamber being in contact with the insulating material of the enclosure; and
   a cover removably coupled to the opening of the enclosure, the cover being in contact with the insulating material of the enclosure, wherein a specimen sample is placed within the specimen chamber and in contact with the insulating material of the enclosure such that a temperature of the insulating material is transferred to the specimen sample at a desired rate.
2. The device, wherein the specimen chamber comprises a plurality of specimen containment chambers.
3. The device, further comprising a thermal ballast thermally coupled to the specimen chamber.
4. The device, further comprising a thermoconductive material interposedly positioned between the specimen chamber and at least one of the enclosure and the cover, wherein the thermoconductive material is in contact with the insulating material of the enclosure.
5. The device, further comprising a thermoconductive material interposedly positioned between the specimen chamber and at least one of the enclosure, the cover, and the thermal ballast.
6. The device, wherein the thermal ballast comprises at least one of a metal, a metal alloy, a ceramic material, a sealed liquid container, a plastic material, a glass material, a cast material, a synthetic material, a silicone material, and combinations thereof.
7. The device, wherein the thermoconductive material is selected from the group consisting of a metal, a metal alloy, a ceramic material, a plastic material, a plastic compound, and combinations thereof.
8. A method for manufacturing a device for concurrently and uniformly removing thermal energy from a specimen sample, the method comprising:
   providing a thermally insulated device having a specimen chamber into which the specimen sample is loaded;
   disposing the specimen chamber into an insulation base, the insulation base comprising an insulating material;
   providing a cover for the insulation base, the cover being removably couple to the insulation base and forming a thermal seal between the specimen chamber and the cover.
9. The method, further comprising providing a thermal ballast in contact with at least one of the insulation base, the specimen chamber, the specimen sample, and the cover.
10. The method, wherein the specimen chamber comprises a plurality of specimen containment chambers for receiving a plurality of specimen samples.
11. The method, wherein the insulating material is selected from a group consisting of a uniform density cross-linked closed-cell polyethylene foam rubber material, a uniform density polystyrene foam material, a closed-cell polyurethane foam material, and combinations thereof.
12. A method for concurrently and uniformly removing thermal energy from a specimen sample, the method comprising:
   placing the specimen sample in a sample container;
   embedding the sample container in a thermal insulating device comprising an insulating material; and
   placing the thermal insulating device into a lower temperature environment, wherein the thermal insulating device comprises an insulation base for receiving the sample container.
13. The method, wherein the thermal insulating device further comprises a cylindrical insulation base having a plurality of sample container chambers arranged in a radially equidistant orientation with respect to a central axis of the cylindrical insulation base, the thermal insulating device further having an insulating cover coupled to the cylindrical insulation base, a seal being formed between the cover and the cylindrical insulation base.
14. The method, wherein the plurality of sample container chambers are symmetrically oriented about the central axis of the cylindrical insulation base.
15. The method, wherein the insulating material is a solid insulating foam.
16. The method, wherein the insulating material comprises a synthetic material.
17. The method, further comprising a ballast chamber centrally and coaxially disposed within the plurality of specimen sample containment chambers, the ballast chamber containing a removable thermal ballast.
18. The method, wherein an exterior of the device comprises a second insulating material to reduce heat transfer to and from the operator during physical contact.
19. The method, wherein the thermal insulating device further comprises a thermally conductive material.
20. A method wherein the sample container comprises a removable rack having a plurality of holes.

## Claims

1. A method for freezing a specimen sample, said method comprising:
equilibrating to 20°C a specimen freezing rate regulator device, comprising:
a container composed of an insulating material and having a sidewall, a bottom, and a central cavity, the container comprising a plurality of specimen containment chambers formed in the sidewall and positioned between the central cavity and an outer surface of the container, each specimen containment chamber and the central cavity having an opening; and
a cover composed of the insulating material that is adapted to removably couple to the opening of the central cavity and adapted to cover the openings of the specimen containment chambers and the central cavity when coupled to the opening of the central cavity;
equilibrating to 20°C a thermal ballast;
equilibrating to 20°C a sample tube vial;
equilibrating to 20°C a specimen sample;
assembling the equilibrated specimen freezing rate regulator device by:
disposing the equilibrated specimen sample into the equilibrated tube vial;
inserting the equilibrated sample tube vial into one of the plurality of specimen containment chambers of the equilibrated specimen freezing rate regulator device;
inserting the equilibrated thermal ballast into the central cavity; and
securing the equilibrated cover to the equlibrated container thereby enclosing the equilibrated thermal ballast, sample tube vial, and specimen sample therein; and
placing the equilibrated assembled specimen freezing rate regulator device into an environment having a temperature that is less than 20°C.

2. The method of claim 1, further comprising a step for controlling a reduction of the equilibrated temperature of specimen sample by conducting heat energy from the thermal ballast to the specimen sample through the central cavity and specimen containment chambers.

3. The method of claim 1, further comprising a step for reducing the equilibrated temperature of the specimen sample at a freezing rate of -1 °C/min.

4. The method of claim 1, wherein the plurality of specimen containment chambers consist of a single row arranged in a radial pattern in relation to the central cavity and maintained at an equal distance from the central cavity by a uniform layer of the insulating material, the plurality of specimen containment chambers being maintained at an equal distance from the outer surface of the container by a uniform layer of insulating material, a uniform layer of insulating material further interposed between each adjacent specimen containment chamber to maintain an equal distance between each specimen containment chamber, and a uniform layer of insulating material interposed between the bottom of the container and a bottom of each specimen containment chamber.

5. The method of claim 1, wherein the openings of each specimen containment chamber and the central cavity are in an identical plane.

6. The method of claim 1, wherein the container is a monolithic structure.

7. The method of claim 1, wherein a position of each specimen containment chamber is an exact geometric equivalent position with respect to the insulation material between each specimen containment chamber, the bottom of the container, and the outer surface of the container.

8. The method of claim 7, wherein the exact geometric equivalent position of each specimen containment chamber provides an identical temperature reduction profile for a specimen sample inserted therein.

9. The method of claim 1, wherein the thermal ballast comprises a metal or a metal alloy excluding sealed liquid containers.

10. The method of claim 1, further comprising a step for sealing the equilibrated sample tube vial and specimen sample within one of the plurality of specimen containment chambers by securing the equilibrated cover to the equilibrated container.
